## Europäisches Patentamt

## European Patent Office

## Office européen des brevets

(19)

(11) Veröffentlichungsnummer: **0 290 633 B1**

# EUROPÄISCHE PATENTSCHRIFT

(12)

(45) Veröffentlichungstag der Patentschrift:
02.11.89

(21) Anmeldenummer: 87106752.6

(22) Anmeldetag: 09.05.87

(51) Int. Cl.⁴: **B25J 19/02**, G06F 15/62, G05D 1/02

(54) Verfahren zum Erkennen von Änderungen in Fahrraum eines unbemannten Fahrzeuges.

(43) Veröffentlichungstag der Anmeldung:
17.11.88 Patentblatt 88/46

(45) Bekanntmachung des Hinweises auf die Patenterteilung:
02.11.89 Patentblatt 89/44

(84) Benannte Vertragsstaaten:
BE CH DE ES FR GB IT LI NL SE

(56) Entgegenhaltungen:
EP-A- 0 107 820
EP-A- 0 139 292
FR-A- 2 576 005

IEEE TRANSACTIONS ON INDUSTRY APPLICATIONS,
Band IA-19, Nr. 5, September-Oktober 1983,
Seiten 794-801, New York, US;P.C. WEST "Machine
vision in practice"
IEEE TRANSACTIONS ON PATTERN ANALYSIS AND
MACHINE INTELLIGENCE, Band PAMI-7, Nr. 1,
Januar 1985, Seiten 35-45, New York, US;J.Y.S LUH et
al.: "A three-dimensional vision by off-shelf system with
multi-cameras"

(73) Patentinhaber: CARL SCHENCK AG,
Landwehrstrasse 55 Postfach 40 18,
D-6100 Darmstadt(DE)

(72) Erfinder: Schulze, Ekkehard, Schlossgartenplatz 7,
D-6100 Darmstadt(DE)
Erfinder: Von Seelen, Werner, Prof. Dr.,
Ernst-Neeb-Strasse 10, D-6500 Mainz(DE)
Erfinder: Stohrjohann, Kai, Gaustrasse 15,
D-6501 Harxheim(DE)

(74) Vertreter: Dallhammer, Herbert, Dipl.-Ing., CARL
SCHENCK AG Patentabteilung
Postfach 4018 Landwehrstrasse 55,
D-6100 Darmstadt(DE)

## Beschreibung

Die Erfindung betrifft ein Verfahren zum Erkennen von Änderungen im Fahrraum vor einem Transportsystem, insbesondere fahrerlosen Transportsystem, während der Fahrt mittels berührungsloser Aufnehmer sowie einer Verarbeitung der Meßwerte.

Durch die britische Patentanmeldung 20 37 0l5 ist eine Einrichtung an unbemannten Fahrzeugen bekannt geworden, die mittels Ultraschall arbeitet und bei der im Wege der Bewegungsrichtung oder entgegen dieser des Fahrzeugs auftretende Hindernisse erkannt werden. Hierdurch ist es möglich, Kollisionen mit in der Fahrbahn befindlicher Gegenstände zu vermeiden. Auch ist es hierdurch möglich, ein Fahrzeug, beispielsweise in einen Lift zu dirigieren, wenn vorher entsprechende Markierungen nacheinander abgetastet werden.

Durch die deutsche Offenlegungsschrift 30 54 5ll ist ein Hindernisdetektor für Fahrzeuge bekannt geworden, bei dem mittels an einem Fahrzeug angeordnetem Lichtsender und Lichtempfänger ein praktisch rechteckiger Bereich vor dem Fahrzeug überwacht wird. Die Größe des Rechtecks ist so ausgelegt, daß bei Auftreten von Hindernissen in der, dem Fahrzeug gegenüberliegenden, zur Fahrzeugfrontseite parallelen Rechteckseite genügend Zeit vorhanden ist, um das Fahrzeug rechtzeitig abzubremsen.

Durch den so bekannt gewordenen Stand der Technik ist es jedoch nicht möglich, den Fahrraum vor einem unbemannten Fahrzeug so zu überwachen, daß die Lage eines evtl. Hindernisses zum Fahrzeug insgesamt erkannt wird, um hieraus rechtzeitig Lenk oder Bremssignale an das Fahrzeug weiterzugeben. Der Erfindung liegt somit die Aufgabe zugrunde, aus der tatsächlichen Abbildung des Raumes vor einem Fahrzeug eine dort geschehene räumliche Änderung insgesamt festzustellen und hieraus Steuerbefehle abzuleiten. Diese Aufgabe wird mit den kennzeichnenden Merkmalen des Anspruchs I gelöst. Durch das erfindungsgemäße Beleuchten der Fahrbahn mit einer Rasterprojektion in Fahrtrichtung, wobei ein beliebiges Raster verwendet werden kann, wird bei fehlendem Hindernis keine Änderung des projizierten Rasters bei seiner Aufnahme eintreten; befindet sich jedoch ein Hindernis im Fahrweg vor dem Fahrzeug, so wird das abgestrahlte Raster zufolge räumlicher Erstreckung des Hindernisses gestört, so daß die optische Aufnahme eine Rasteränderung registriert und aus der Geometrie der Störung des Rasters bei bekannter Lage des Aufnahmegeräts die Hindernislage zum Fahrzeug erkennbar wird und hieraus Lenk- oder Bremsbefehle an die Lenkung oder Bremseinrichtung des unbemannten Fahrzeugs in Echtzeit weitergegeben werden. Hierbei ist unter Echtzeit die Zeit zu verstehen, die zwischen zwei aufeinanderfolgende Bildfolgen verstreicht.

Das in Anspruch 2 unter Schutz gestellte Verfahren löst ebenfalls die der Erfindung zugrundeliegende Aufgabe. Aus der in einer bestimmten Zeitfolge entstehenden synchronen Bildanzeige und die anschließende Verarbeitung der Bildinformationen auf eine Perspektive bezogen, lassen hier das Hindernis mit seinen Strukturen, die insbesondere orthogonal zur Fahrbahn verlaufen, plastisch erkennen. Hierdurch kann insbesondere bei bewegtem Fahrzeug die scheinbare Bewegung der Umwelt unterdrückt werden, dagegen die scheinbare Bewegung des Hindernisses hervorgehoben werden. Somit ist es auch hier in Echtzeit möglich, die Koordinaten der Hinderniskanten in Bezug auf den mit dem Fahrzeug mitbewegten Koordinatenursprung beziehen und somit Steuerinformationen an die lenkbaren Räder weitergeben.

Nachdem beide Lösungen die Ergebnisse ihrer Erkenntnisse in Echtzeit an die Steuereinrichtungen für das fahrerlose Fahrzeug weitergeben, ist zum einen eine Erhöhung der Fahrgeschwindigkeit derartiger Fahrzeuge möglich und zum anderen eine sichere rechtzeitige Erkennung von Hindernissen, die im Fahrraum vor den Fahrzeugen auftauchen, möglich. Bei bemannten Fahrzeugen tritt hierdurch eine beachtliche Entlasung des Fahrzeugführers ein.

Erfindungsgemäß läßt sich auch durch Vergleich mit den nachfolgenden Bildern der Folge erkennen, ob ein bewegtes Fremdfahrzeug die eigene Fahrbahn kreuzt, oder auf der eigenen Fahrbahn entgegenkommt oder sich auf der eigenen Fahrbahn mit größerer Geschwindigkeit entfernt. Auch hieraus lassen sich erfindungsgemäß Steuerbefehle an die Lenkräder ableiten, um diese zu veranlassen, Lenkbewegungen durchzuführen oder zu beschleunigen oder zu verzögern, bis zum Anhalten.

Durch die in Ausgestaltung des Erfindungsgegenstandes beanspruchte Veränderung der Rasterprojektion von Aufnahme zu Aufnahme wird eine Steigerung der Sicherheit im Hinblick auf die Erkennbarkeit schmaler Gegenstände erreicht. Durch die in noch weiterer Ausgestaltung des Erfindungsgegenstandes vorgeschlagene Änderung der Beobachtungs- und Rasterwinkel zueinander und gegen die Fahrbahn läßt sich eine, den Gegebenheiten angepaßte Auswertung der optischen Informationen erreichen.

Durch die in noch weiterer Ausgestaltung des Erfindungsgegenstandes unter Schutz gestellte Änderung der spektralen Empfindlichkeit lassen sich Fremdlichteinflüsse oder Störungen der Sichtbarkeit durch Schmutz oder Nebel vermieden; ebenso läßt sich erfindungsgemäß durch eine rasche Aufnahmefolge des Raumes mit und ohne Rasterprojektion Störeinflüsse durch Fremdlicht und/oder sichtbare Strukturen der Fahrebene wie Markierungsstreifen oder Schmutz praktisch ausschalten.

Die der Erfindung zugrundeliegende Aufgabe läßt sich auch durch eine Vorrichtung zum Erkennen von Änderungen im Fahrraum vor einem Transportsystem insbesondere einem fahrerlosen Transportsystem während der Fahrt mittels berührungsloser Sender und Aufnehmer für die Steuerung mit Lenk- und in ihrer Beschleunigung veränderbarer Laufrädern versehenen Transportsystems durch die in Anspruch 7 unter Schutz gestellten Maßnahmen lösen. Durch die Auswertung des von einer Kamera aufgenommenen Bildes des Raumes vor dem Fahrzeug einschließlich dem optisch sichtbaren Raster werden auftretende Änderungen des Rasters, die stellvertretend für ein vorhandenes Hindernis im Fahrraum aufgenommen werden bis zur nächsten Bildfolge bereits Erkenntnisse an die lenkbaren Laufräder, deren Beschleunigung variierbar ist, so rechtzeitig gegeben, daß das Fahrzeug das Hindernis durch Lenkbewegungen umgehen kann oder im Falle einer Blockade des Fahrraums durch ein Hindernis rechtzeitig anhalten kann.

Die in Anspruch 8 unter Schutz gestellte Vorrichtung löst ebenfalls die der Erfindung zugrundeliegende Aufgabe. Durch die von einer Perspektive ausgehende Betrachtung der beiden synchron ermittelten Bilder desselben Fahrraumes, wird ebenfalls in Echtzeit und damit auch bei normaler Geschwindigkeit ein Hindernis so rechtzeitig erkannt, daß Schutzbewegungen ohne Verzug eingeleitet werden können.

Durch Änderung des Abstandes zwischen Sender und Videokamera läßt sich die Auswertung eines mit Raster versehenen Raumes auch auf Sonderfälle anwenden.

In noch weiterer Ausgestaltung des Erfindungsgegenstandes sind auch die Abstände der beiden Videokameras veränderbar, so daß auch flache Gegenstände, die als Hindernis im Fahrraum vorhanden sind, deutlich erkannt werden können.

Durch die Erfindung lassen sich auch bei ungünstigen Lichtverhältnissen, bei denen die Hindernisse durch Schattenbildung praktisch in ihren orthogonal zur Fahrbahn verlaufenden Flächen praktisch unkenntlich werden, durch Anwendung des Rasterverfahrens oder durch Anwendung der doppelten Kamera eindeutig und rechtzeitig erkennen.

In der nachfolgenden Zeichnung wird die Erfindung näher erläutert.

Es zeigen in schematischer Darstellung:

Fig. 1a in Draufsicht und Ansicht die Detektion eines Hindernisses mit Hilfe erfindungsgemäßem Rasterverfahren

Fig. 1b in Draufsicht die Detektion eines Hindernisses mittels zweier Videokameras

Fig. 2a - e Hinderniserkennung durch Anwendung des erfindungsgemäßen Rasters

Fig. 3a - d Hinderniserkennung durch Anwendung einer erfindungsgemäßen gemeinsamen Perspektive auf beide Videokameras.

Gleiche Bauteile in den verschiedenen Figuren werden mit denselben Bezugsziffern bezeichnet.

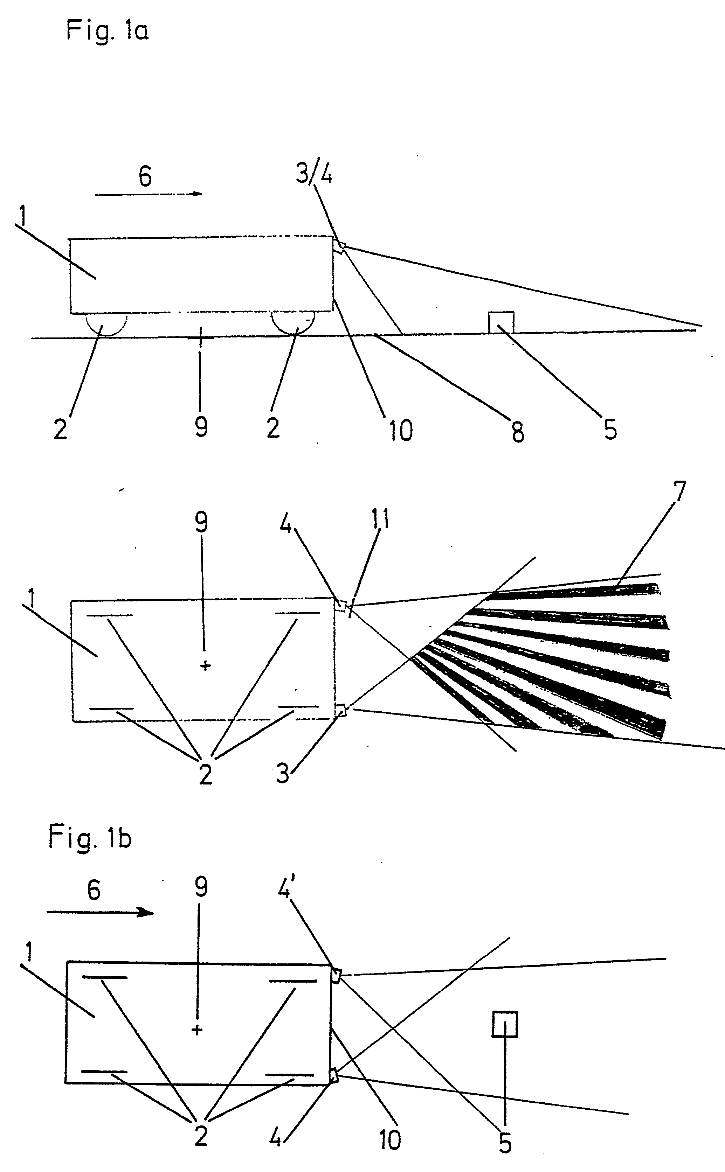

Gemäß Fig. 1a bewegt sich ein fahrerloses Transportsystem 1 entsprechend einem Richtungspfeil 6 auf ein in seiner Fahrbahn befindliches Hindernis 5 zu. Durch ein von einem Sender 3 ausgestrahltes Raster 7 wird das Hindernis 5 aus Perspektive des Senders 3 in derselben Weise wie die Fahrbahn 8 überzogen. Hierdurch entfallen entfallen aus Perspektive der Kamera 4 bei einem Vergleich eines Bildes, welches die Kamera 4 vom Fahrraum aufgenommen hat, ohne daß das Hindernis 5 vorhanden war, mit dem nachfolgenden Bild der Kamera 4, die das Hindernis 5 enthält alle gleichgerichteten Rasterelemente. Erhalten bleiben jedoch die Rasterstreifen, die sich durch das Hindernis aus Perspektive der Kamera 4 verschoben haben. Hieraus läßt sich die Lage des Hindernisses zu einem mit dem Fahrzeug 1 mitbewegten Koordinatenursprung 9 bestimmen. Im Ausführungsbeispiel ist Raster 7 als Linienraster ausgeführt, daß es auf dem Target der Kamera 4 als parallel Streifenschar abgebildet wird. Diese dort abgebildete parallele Streifenschar wird erfindungsgemäß erzeugt durch einen von der Kamera synchronisierten Blitz, insbesondere Xenon Blitz, der ein in im Sender 3 (Projektionseinrichtung) enthaltenes, entsprechend ausgebildetes Dia durchstrahlt. Durch die Wahl dieser Streifenschar parallel auf das Kameratarget ausgerichtet, wird erfindungsgemäß die optische Tiefpassfilterung unter Verwendung einer Zylinderlinse erreicht. Anstelle dieser optischen Tiefpassfilterung läßt sich dieses Ergebnis auch leicht in einem Rechner durchführen.

Weiterhin wird durch erfindungsgemäßen Einsatz eines Rotfilters 11 in der Kameraoptik eine sehr starke Verminderung von Fremdlichteinflüssen erzielt; anstelle eines Rotfilters können auch alle optischen Filter, die im spektralen Empfindlichkeitsbereich der verwendeten Kamera liegen, benutzt werden. Selbstverständlich muß die Projektionseinrichtung 3 im selben Spektralbereich Licht emittieren.

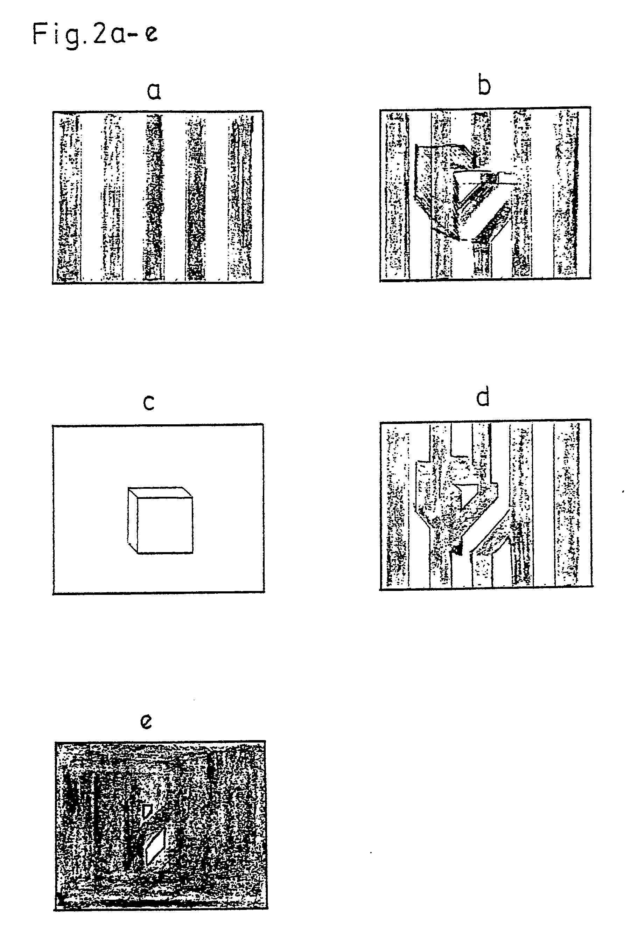

Fig. 2a zeigt die parallele Streifenschar 7 im hindernisfreien Fall, wie sie auf dem Kameratarget abgebildet wird.

In Fig. 2b ist zusätzlich die Streifenstörung durch ein Hindernis 5 zu sehen.

Fig. 2c zeigt die gleiche Szene wie die Fig. 2b, nur ohne Raster. Erfindungsgemäße Differenzbildung zwischen Fig. 2b und 2c läßt in Fig. 2d nur noch die Raster erkennen. Während durch erfindungsgemäßen Vergleich des ungestörten Rasters 7 in Fig. 2a mit dem gestörten in Fig. 2d ausschließlich die Störung erscheint, wie in Fig. 2e dargestellt.

In Fig. 1b wird die Darstellung eines Hindernisses mit zwei beabstandeten Kameras 4 und 4' näher erläutert. Die Kameras 4 und 4' befinden sich an der Frontseite 10 des fahrerlosen Transportsystems 1, welches über lenkbare Räder auf einer Fahrbahn 8 entlangfährt. Sowohl die Kamera 4 als auch die Kamera 4' nehmen synchron oder zeilenalternierend ein Bild des Hindernisses 5 auf. Durch die Anordnung der Kameras 4, 4' an der Frontseite 10 nimmt jede der beiden Kameras, die der Fahrzeugfrontseite gegenüberliegende Fläche des Hindernisses 5 gleich auf. Die sich vom fahrerlosen Transportsystem 1 wegerstreckenden Seiten des Hindernisses 5 werden jedoch jeweils nur von einer Kamera 4 bzw. 4' aufgenommen. Bei der Auswertung dieser beiden Bilder, bezogen auf eine gemeinsame Perspektive, die beispielsweise die Perspektive einer Kamera oder eine zyklopische Perspektive sein kann, läßt sich hieraus ebenfalls die Lage und somit die Koordinaten des Hindernisses zum Koordinatenursprung 9 auf dem fahrerlosen Transportsystem 1 festlegen.

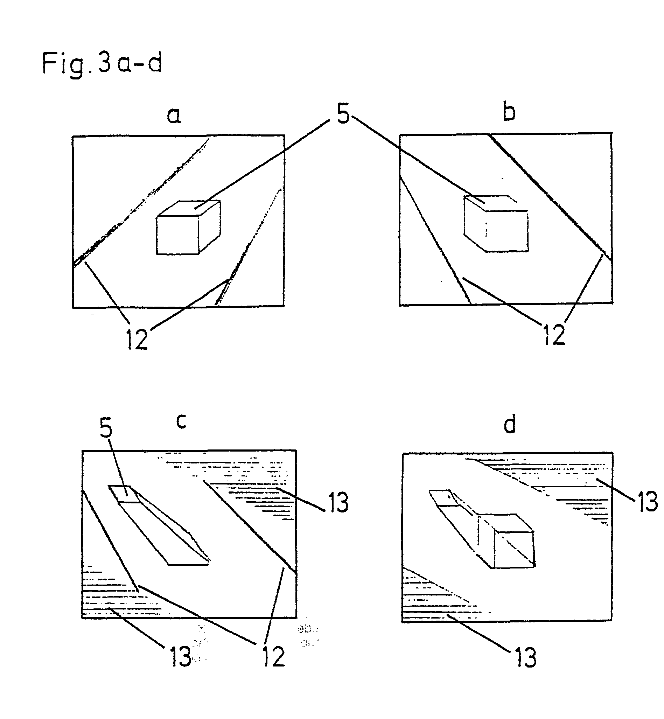

Fig. 3a und 3b zeigen eine Szene mit Hindernis 5 und Fahrstreifenmarkierungen 12 aus Sicht der Kameras 4 und 4'.

Fig. 3c gibt Fig. 3a nach erfindungsgemäßem Umrechnen auf die Perspektive von Kamera 4' wieder, wobei die schraffierten Teile 13 die Gebiete darstellen, die nicht von beiden Kameras erfaßt werden können. Deutlich ist die Verzerrung des Hindernisses 5 zu erkennen. Nach erfindungsgemäßem Vergleich der Bilder 3b und 3c zeigt Fig. 3d nur noch die Strukturen des Hindernisses 5, während die in der Fahrebene liegenden Markierungen verschwinden.

**Patentansprüche**

I. Verfahren zum Erkennen von Änderungen im Fahrraum vor einem Transportsystem, insbesondere fahrbarem Transportsystem während der Fahrt, mittels berührungsloser Aufnehmer sowie einer Verarbeitung der Meßwerte für die Steuerung des Transportsystems, dadurch gekennzeichnet, daß aus mindestens einer von mindestens zwei beabstandeten Öffnungen am Fahrzeug eine Rasterprojektion in Fahrtrichtung auf die Fahrbahn abgestrahlt wird und von mindestens einer anderen Öffnung von der Rasterprojektion und von dem vor dem Fahrzeug befindlichen Raum Bildfolgen aufgenommen werden, und daß Rasteränderungen nach Verarbeitung in Echtzeit eine Steuerung des insbesondere fahrerlosen Transportsystems veranlassen.

2. Verfahren zum Erkennen von Änderungen im Fahrraum vor einem Transportsystem, insbesondere fahrerlosen Transportsystem während der Fahrt, mittels berührungsloser Aufnehmer sowie einer Verarbeitung der Meßwerte für die Steuerung des Transportsystems, dadurch gekennzeichnet, daß über jede von mindestens zwei beabstandeten Öffnungen mittels Kamera Bildfolgen von dem Raum vor dem Fahrzeug aufnimmt, daß die so gewonnenen Aufnahmen auf eine gemeinsame Perspektive transformiert und verglichen werden, daß hierbei entstehende Änderungen zwischen den Bildern nach Verarbeitung in Echtzeit eine Steuerung des insbesondere fahrerlosen Transportsystems veranlassen.

3. Verfahren nach Anspruch I, dadurch gekennzeichnet, daß die Rasterprojektion von Aufnahme zu Aufnahme veränderbar ist.

4. Verfahren nach Anspruch I, dadurch gekennzeichnet, daß Beobachtungs- und Rasterwinkel zueinander und zur Fahrbahn veränderbar sind.

5. Verfahren nach einem oder mehreren der Ansprüche I, 3 und 4, dadurch gekennzeichnet, daß bei der Aufnahme von Rasterprojektion und Hindernis die spektrale Empfindlichkeit des berührungslosen Aufnehmers verändert wird.

6. Verfahren nach einem oder mehreren der Ansprüche I, 3, 4 und 5, dadurch gekennzeichnet, daß bei rascher Aufeinanderfolge von Aufnahmen des Raums mit und ohne Raster eine Subtraktion oder Division zwischen Rasterbild und rasterfreiem Bild durchgeführt wird.

7. Vorrichtung zum Erkennen von Änderungen im Fahrraum vor einem Transportsystem, insbesondere fahrerlosem Transportsystem während der Fahrt, mittels berührungsloser Sender und Aufnehmer für die Steuerung des mit Lenk- und in ihrer Beschleunigung veränderbaren Laufrädern versehenen Transportsystems, insbesondere zur Durchführung des Verfahrens nach Anspruch I und/oder 5 und/oder 6, dadurch gekennzeichnet, daß mindestens ein Sender in den Raum vor das Transportsystem einen optisch sichtbaren Raster abstrahlt, daß eine Videokamera in vorgegebener zeitlicher Folge Bilder von dem Raum und dem Raster aufnimmt, daß diese Bilder gespeichert und in einer Recheneinheit in Bezug auf das aufgenommene Rasterbild in einer Zeit, die kürzer als die Bildfolge ist, verarbeitet werden dergestalt, daß aus einer entsprechenden Änderung des Rasters die Koordinaten eines Hindernisses in Bezug auf einen, mit dem Fahrzeug mitbewegten Koordinatenursprung bestimmt werden, daß hieraus Steuerbefehle an die Laufräder gegeben werden, und daß der Sender und die Videokamera in einer Ebene im Abstand voneinander am Fahrzeug angeordnet sind.

8. Vorrichtung zum Erkennen von Änderungen im Fahrraum vor einem Transportsystem, insbesondere fahrerlosem Transportsystem während der Fahrt, mittels berührungsloser Aufnehmer für die Steuerung des mit Lenk- und, in ihrer Beschleunigung veränderbaren, Laufräder versehenen Transportsystems, insbesondere zur Durchführung des Verfahrens nach Anspruch 2, dadurch gekennzeichnet, daß mindestens zwei am Fahrzeug angeordnete, in einer Horizontalebene beabstandete Videokameras angeordnet sind, daß beide Kameras synchron in vorgegebener zeitlicher Folge Bilder von dem Raum vor dem Fahrzeug aufnehmen, daß beide Bilder gespeichert und in einer Recheneinheit in einer Zeit, die kürzer ist als die Bildfolge, ausgewertet werden dergestalt, daß eine Transformation von auf den Bildern vorhandenen Gegenständen auf eine gemeinsame Perspektive durchgeführt wird, daß hieraus die Koordinaten eines Hindernisses in Bezug auf einen mit dem Fahrzeug mitbewegten Koordinatenursprung bestimmt werden und daß hieraus Steuerbefehle an die Laufräder gegeben werden.

9. Vorrichtung nach Anspruch 7, dadurch gekennzeichnet, daß der Abstand zwischen Sender und Videokamera veränderbar ist, und daß Sender und Videokamera in einer horizontalen Ebene angeordnet sind.

I0. Vorrichtung nach Anspruch 8 dadurch gekennzeichnet, daß der Abstand zwischen den beiden Videokameras veränderbar ist.

**Claims**

1. A method of recognising changes in the travelling space ahead of a transport system, more particularly a drivable transport system during the journey, with the aid of contact free receivers and processing of the measured values for controlling the transport system, characterised in that out of at least one of at least two spaced openings on the vehicle a raster projection is irradiated in the direction of travel on to the travel path, and image sequences are taken of the space ahead of the vehicle, and that raster changes, after real time processing, cause the, in particular driverless, transport system to be controlled.

2. A method of recognising changes in the travelling space ahead of a transport system, more particularly a driverless transport system during the journey, with the aid of contact free receivers and processing of measured values for controlling the transport system, characterised in that by means of each of at least two spaced openings image sequences are taken of the space ahead of the vehicle with the aid of a camera, that the images thus obtained are transformed to a common perspective and compared, that any changes thus arising between the images after processing in real time initiate control of the, in particular driverless, transport system.

3. A method according to claim 1, characterised in that the raster projection may be changed from image to image.

4. A method according to claim 1, characterised in that the observation and raster angles may be changed with respect to one another and to the travel path.

5. A method according to any one or more of claims 1, 3 and 4, characterised in that when receiving the raster projection and obstacle the spectral sensitivity of the contact-free receiver is changed.

6. A method according to any one of claims 1, 3, 4 and 5, characterised in that when taking a rapid succession of images of the space with and without the raster, a subtraction or division between the raster picture and the raster-free picture is carried out.

7. A device for recognising changes in the travelling space ahead of a transport system, more particularly driverless transport system during the journey, with the aid of contact free transmitters and receivers for controlling the transport system provided with steering wheels and with running wheels which may be changed in their acceleration, more particularly for carrying out the method according to claim 1 and/or 5 and/or 6, characterised in that at least one transmitter radiates into the space ahead of the transport system an optically visible raster, that a video camera receives images from the space and the raster in predetermined temporal sequence, that these images are stored and processed in a computer in relation to the received raster image in a time which is shorter than the image sequence, such that from a corresponding change in the raster the coordinates of an obstacle are determined in relation to the origin of the coordinates which moves with the vehicle, that from this control commands are passed to the running wheels, and that the transmitter and the video camera are arranged in a plane at a spacing from each other on the vehicle.

8. A device for recognising changes in the travelling space ahead of a transport system, more particularly a driverless transport system during the journey, with the aid of contact free receivers for controlling the transport system provided with steering wheels and with running wheels which may be changed in their acceleration, more particularly for carrying out the method according to claim 2, characterised in that at least two video cameras are arranged on the vehicle and at a spacing in a horizontal plane, that both cameras synchronously receive images of the space in front of the vehicle in predetermined time sequence, that both images are stored and evaluated in a computer in a time which is shorter than the image sequence, such that objects present on the images are transformed on to a common perspective, that from this the coordinates of an obstacle are determined in relation to the origin of the coordinates moved along with the vehicle and that from this control commands are passed to the running wheels.

9. A device according to claim 7, characterised in that the spacing between the transmitter and video camera may be changed, and that transmitter and video camera are arranged in a horizontal plane.

10. A device according to claim 8 characterised in that the spacing between the two video cameras may be changed.

**Revendications**

1. Procédé pour détecter les modifications dans l'espace de circulation situé en avant d'un système de transport, notamment un système de transport pouvant circuler, pendant la marche, au moyen de capteurs sans contact et d'un traitement des valeurs mesurées pour commander le système de transport, caractérisé en ce qu'on projette d'au moins une ouverture parmi au moins deux ouvertures écartées l'une de l'autre sur le véhicule, une projection d'un réseau sur la voie de circulation, dans le sens de la marche, en ce que des series d'images de la projection du réseau et de l'espace situé en avant du véhicule sont enregistrées par au moins une autre ouverture, et en ce que des modifications du reseau, après traitement en temps réel, déclenchent une commande du système de transport notamment sans conducteur.

2. Procédé pour détecter des modifications dans l'espace de circulation situé en avant d'un système de transport, notamment un système de transport sans conducteur, pendant la marche, au moyen de capteurs sans contact et d'un traitement des valeurs mesurées pour commander le système de transport, caractérisé en ce que, par l'intermédiaire d'au moins deux ouvertures distantes l'une de l'autre, des séquences d'images de l'espace situé en avant du véhicule sont prises par une caméra, que les vues ainsi obtenues sont transformées en une perspective commune et comparées, et que les changements produits entre les images, après traitement en temps réel, déclenchent une commande du système de transport sans conducteur.

3. Procédé selon la revendication 1, caractérisé en ce que la projection du réseau peut être modifiée d'une prise de vue à l'autre.

4. Procédé selon la revendication 1, caractérisé en ce qu'on peut faire varier l'un par rapport et par rapport à la voie de circulation les angles d'observation et les angles du réseau.

5. Procédé selon l'une ou plusieurs des revendications 1, 3 et 4, caractérisé en ce que, lors de l'enregistrement de la projection du réseau et de l'obstacle, la sensibilité spectrale des capteurs sans contact est modifiée.

6. Procédé selon l'une ou plusieurs des revendications 1, 3, 4 et 5, caractérisé en ce que, lors d'une succession rapide de prises de vue de l'espace, avec ou sans réseau, on effectue une soustraction ou une division entre l'image du réseau et l'image sans réseau.

7. Dispositif pour détecter des modifications dans l'espace de circulation situé en avant d'un système de transport, notamment un système de transport sans conducteur, pendant la marche, au moyen de capteurs sans contact, pour la commande du système de transport muni de roues de roulement dont on peut faire varier l'accélération, notamment pour mettre en œuvre le procédé selon la revendication 1 et/ou 5 et/ou 6, caractérisé en ce qu'au moins en émetteur envoie dans l'espace en avant du système de transport, un réseau optiquement visible, en ce qu'une caméra vidéo enregistre, en séquence chronologique prédéterminée, des images de l'espace et du réseau, en ce que ce ces images sont mises en mémoire et traitées dans une unité de calcul par rapport à l'image du réseau enregistrée, dans un laps de temps est plus court que la séquence d'images, en ce qu'à partir d'une modification correspondante du réseau, les coordonnées d'un obstacle sont déterminées par rapport à une origine de coordonnées se déplaçant avec le véhicule, en ce qu'à partir de là des signaux de commande son envoyés aux roues de roulement et en ce que l'émetteur et la caméra vidéo sont disposés sur le véhicule dans un même plan, à une certaine distance l'un de l'autre.

8. Dispositif pour détecter des modifications dans l'espace de circulation situé en avant d'un système de transport, notamment un système de transport sans conducteur, pendant la marche, au moyen de capteurs sans contact, pour la commande du système de transport muni de roues de roulement dont on peut faire varier l'orientation et l'accélération, notamment pour mettre en œuvre le procédé selon la revendication 2, caractérisé en ce qu'au moins deux caméras vidéo sont disposées, écartées l'une de l'autre, dans un plan horizontal sur le véhicule, que les deux caméras prennent en synchronisme, dans une séquence chronologique prédéterminée, des images de l'espace en avant du véhicule, que les deux images sont enregistrées et évaluées dans une unité de calcul dans un laps de temps plus court qlue la séquence d'images, qu'une transformation des objets se trouvant sur les images est effectuée pour obtenir une perspective commune, qu'à partir de là on détermine les coordonnées d'un obstacle par rapport à une origine de coordonnées se déplaçant avec le véhicule et que des ordres de commande sont envoyés aux roues de roulement.

9. Dispositif selon la revendication 7, caractérisé en ce qu'on peut faire varier la distance entre émetteur et caméra vidéo et en ce qu'émetteur et caméra vidéo sont disposés dans un plan horizontal.

10. Dispositif selon la revendication 8, caractérisé en ce qu'on peut faire varier la distance entre les deux caméras vidéo.

# Fig. 1a

# Fig. 1b

Fig.2a-e

a

b

c

d

e

Fig.3 a-d